# EUROPEAN PATENT SPECIFICATION

(11) **EP 2 111 903 B1**
(45) Date of publication and mention of the grant of the patent: **07.05.2014**
(21) Application number: 08710640.7
(22) Date of filing: 30.01.2008
(51) Int. Cl.: B01D 39/20, B01D 46/00, C04B 35/46, F01N 3/02, B01D 46/24, C04B 38/00, F01N 3/022, C04B 111/00, C04B 35/478

(54) **HONEYCOMB STRUCTURE, AND PURIFYING DEVICE**
WABENSTRUKTUR UND REINIGUNGSVORRICHTUNG
STRUCTURE EN NID D'ABEILLES ET DISPOSITIF D'ÉPURATION

(30) Priority: 30.01.2007 JP 2007018765
(43) Date of publication of application: 28.10.2009
(73) Proprietor: Kyocera Corporation, Kyoto-shi, Kyoto-fu 612-8501 (JP)
(72) Inventor: YAMAGUCHI, Shinichi, Kirishima-shi Kagoshima 899-4396 (JP)
(74) Representative: Banzer, Hans-Jörg
(86) International application number: PCT/JP2008/051396
(87) International publication number: WO 2008/093727

(56) References cited:
- EP-A1- 1 609 519
- WO-A1-2004/113252
- JP-A- 08 000 931
- JP-A- 2004 151 446
- JP-A- 2006 305 503
- US-A1- 2007 105 707
- US-A1- 2007 119 133

## Description

### TECHNICAL FIELD

The present invention relates to a honeycomb structure that captures particulate matter contained in, for example, gas or liquid, and to a purifying apparatus that employs the honeycomb structure.

### BACKGROUND ART

Honeycomb structures that capture particulate matter contained in the exhaust gas generated by internal combustion engines, incinerating furnaces, boilers, etc. and purifying apparatuses that employ the honeycomb structure have been used for the purpose of preventing environmental pollution. For example, there has been used a honeycomb structure having a plurality of flow paths separated from each other by a partition wall that is disposed in the axial direction (flow paths being disposed thorough the partition wall(s)). Such a honeycomb structure and a purifying apparatus are used for the purpose of, for example, capturing particulate matter composed mainly of carbon (hereinafter referred to as 'diesel particulates') contained in the exhaust gas of diesel engines.

In the honeycomb structure, exhaust gas is introduced into the flow paths that are open at the input ends thereof, and flows through the flow paths while the diesel particulates are captured on the partition wall, so that clean exhaust gas without the diesel particulates comes out of the flow paths of which output ends are open.

### DISCLOSURE OF THE INVENTION

### Problems to be Solved by the Invention

In conventional honeycomb structures, the surface condition of the partition wall which related to the ability of capturing diesel particulates is merely specified by 10-point mean roughness (Rz) and maximum height Ry representing only the direction of height in roughness curve. When the surface condition of the partition wall of the honeycomb structure is specified by the parameter that indicates the direction of height in roughness curve only, there have been such cases that resistance to the flowing gas undergoes relatively large variations during use and the capturing efficiency decreases in a relatively short period of time of capturing diesel particulates.

The document DE19522312 describes a honeycomb structure wherein the walls have a specific roughness defined as "valley-level", measured according to a Japanese industrial norm: JIS B-0651.

The present invention has been made in light of the problems described above, and an object thereof is to provide a honeycomb structure that can be used with stable performance over a relatively long period of time and a processing apparatus that employs the honeycomb structure.

### Means for Solving the Problems

The present invention provides a honeycomb structure as defined in claim 1 and a purifying apparatus as defined in claim 9. The dependent claims define preferred embodiments of the invention.

The present invention provides a honeycomb structure having a plurality of flow paths that are separated from each other by partition wall which extend from an input end face to an output end face, wherein the partition wall has a load length ratio (Rmr (c)) of 50% to 75% determined at a cutting level of 70% with a reference length of 0.8 mm.

The present invention also provides a purifying apparatus comprising the honeycomb structure and a casing that has an inlet port located on the side of the input end face and an outlet port located on the side of the output end face and accommodates the honeycomb structure, wherein a gas or liquid is passed from the inlet to the outlet while particulate matter contained in the gas or liquid is captured on the partition wall.

### Effect of the Invention

The honeycomb structure of the present invention can be used with stable performance over a relatively long period of time. According to the present invention, relatively long regeneration interval of the honeycomb structure can be achieved.

### BRIEF DESCRIPTION OF THE DRAWINGS

Fig. 1 shows a honeycomb structure according to a first embodiment of the present invention; (a) in perspective view and (b) in sectional view in a plane parallel to the axial direction (A).
Fig. 2 shows the honeycomb structure according to the first embodiment of the present invention; (a) in partial side view of the input end face, and (b) in partial side view of the output end face.
Fig. 3(a) is a diagram showing an example of roughness curve and Fig. 3(b) is a diagram showing a load curve of the roughness curve.
Fig. 4 is a schematic diagram of roughness curve having load length ratio (Rmr (c)) of 90% or less.
Fig. 5 is a schematic diagram of roughness curve having load length ratio (Rmr (c)) higher than 90%.
Fig. 6 shows another embodiment of the honeycomb structure according to the first embodiment of the present invention; (a) in partial side view of the input end face, and (b) in partial side view of the output end face.
Fig. 7 is a sectional view schematically showing an example of exhaust gas processing apparatus that employs the honeycomb structure according to a second embodiment of the present invention
Fig. 8 shows one embodiment of the honeycomb structure according to the second embodiment of the present invention; (a) in sectional view in a plane parallel to the axial direction and (b) in enlarged view of plugged portion having concave internal end.
Fig. 9 shows another embodiment of the honeycomb structure according to the second embodiment of the present invention; (a) in sectional view in a plane parallel to the axial direction and (b) in enlarged view of plugged portion having concave internal end.

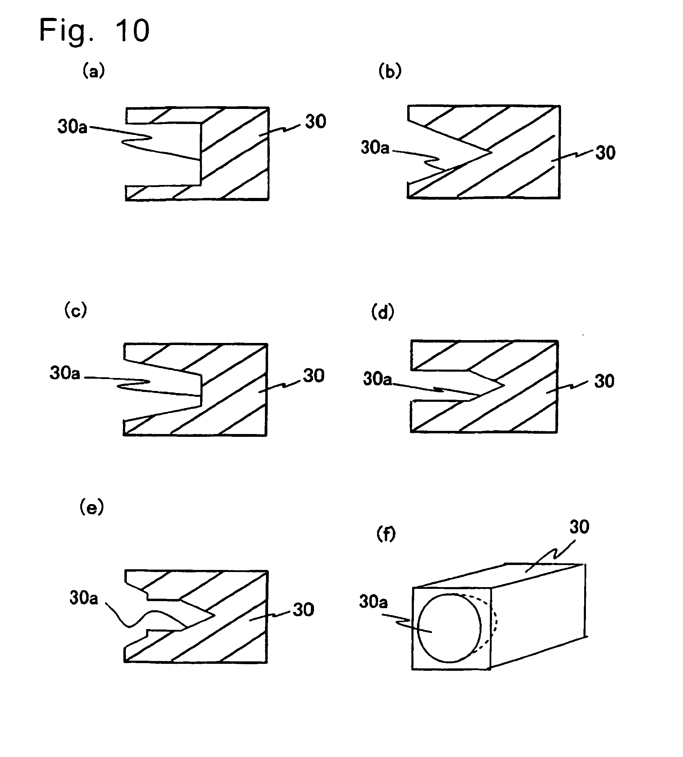

Fig. 10 shows the shape of the internal end of the plugged portion according to the second embodiment of the present invention; (a) in sectional view in the axial direction of rectangular shape; (b) in sectional view in the axial direction of pyramidal or conical shape; (c) in sectional view in the axial direction of truncated pyramidal or conical shape; (d) in sectional view in the axial direction of screw driver tip shape; (e) in sectional view in the axial direction of configuration combining truncated pyramidal or conical shape and screw driver tip shape; and (f) in a perspective view showing the internal end of the plugged portion.

### Explanation of Letters or Numerals

1: Honeycomb structure
2: Flow path
3, 30: Plugged portion
4: Partition wall
5: Exhaust gas inlet
6: Exhaust gas outlet
7: Casing
8: Insulator material
9: Exhaust pipe
10: Exhaust gas processing apparatus

### BEST MODE FOR CARRYING OUT THE INVENTION

Best mode for carrying out the present invention will be described below with reference to the accompanying drawings.

### 1. First Embodiment

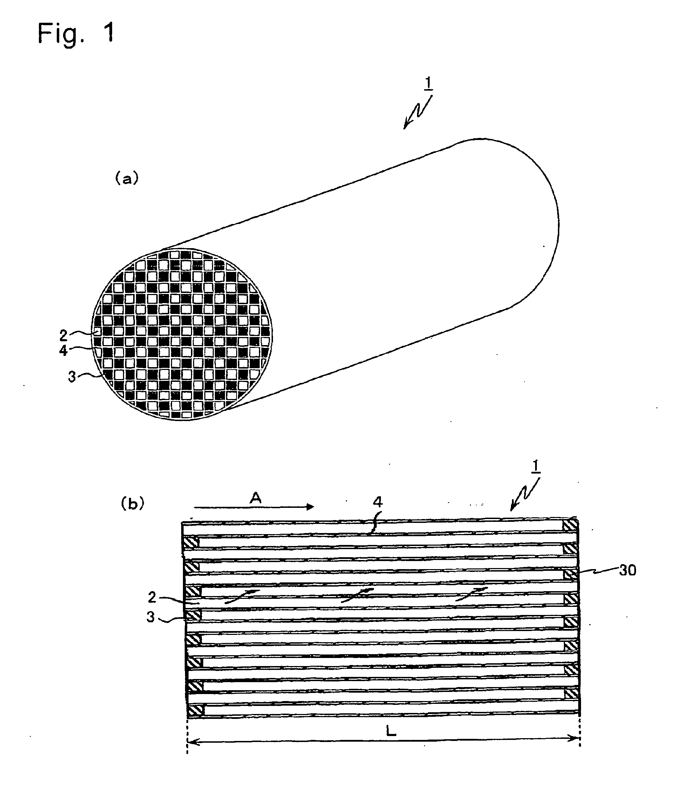

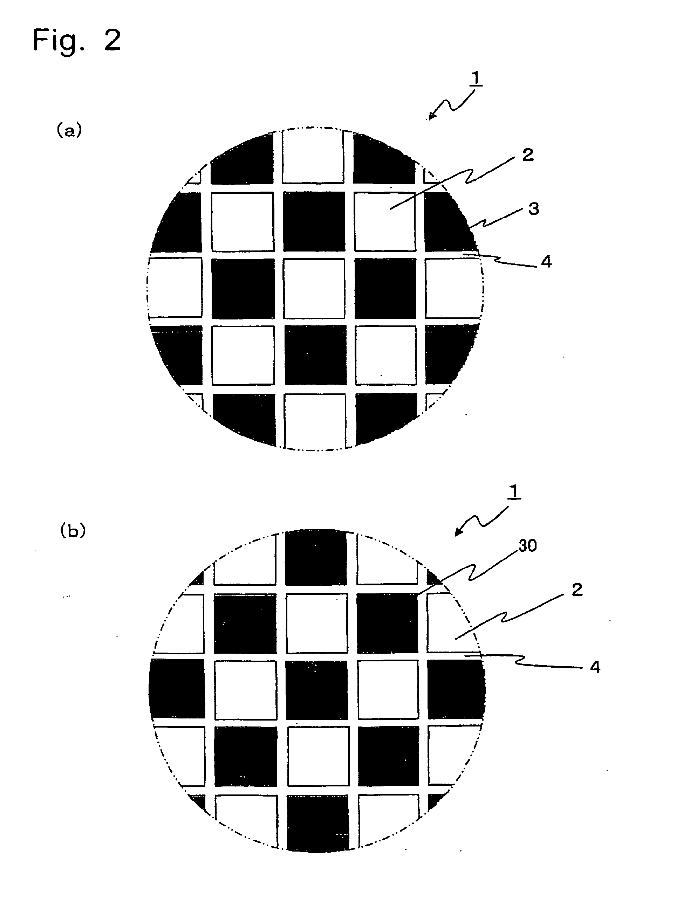

Fig. 1 shows honeycomb structure according to one embodiment of the present invention; (a) in perspective view and (b) in sectional view in a plane parallel to the axial direction (A). Fig. 2 shows the an end face of the honeycomb structure shown in Fig. 1 viewed in the axial direction, (a) in plan view showing a part of the input end face of the honeycomb structure, and (b) in plan view showing a part of the output end face of the honeycomb structure.

As shown in Figs. 1 and 2, the honeycomb structure of the present invention has a plurality of flow paths 2 separated from each other by a partition wall 4 that are disposed in the axial direction (A) (flow paths being disposed through the partition wall(s) (4)), which are disposed in a checkered pattern when viewed on the end face in the axial direction as shown in Fig. 2. Some of the plurality of flow paths 2 are blocked in the plugged portion 3 on the input end thereof (input end face of the honeycomb structure) and the others are blocked in the plugged portion 30 on the output end thereof (output end face of the honeycomb structure), that are disposed alternately. With this construction, the flow paths 2 that are blocked on the input end and the flow paths 2 that are blocked on the output end are disposed alternately adjacent to each other. While the honeycomb structure 1 is formed from a sintered body containing, for example, cordierite, aluminum titanate, silicon carbide, silicon nitride, alumina, mullite, lithium aluminum silicate as main components, it is preferable to form the honeycomb structure from a sintered body composed of aluminum titanate as a main component, since resistance to thermal shock is influenced by the composition. This is because the exceptionally high resistance of aluminum titanate to thermal shock enables it to achieve high long-term reliability.

The term 'main component' used herein in refers to a component that occupies 50% by mass or more of the components constituting the honeycomb structure 1, while the component can be identified by X-ray diffraction analysis and semi-quantitative analysis of the component can be made by fluorescent X-ray analysis.

The plugged portion 3 on the input end and/or the plugged portion 30 on the output end may also be provided at positions located inward from the end in the flow path 2, instead of at the end as shown in Fig. 1(b). In this case, it is preferable to provide the plugged portion 3 and the plugged portion 30 at positions 5% of the axial length of the flow path 2 or less inward from the end.

Moreover, with regard to the plugged portion 3 on the input end or the plugged portion 30 on the output end, the plugged portion may be provided at an intermediate position instead of the end of the flow path 2. In this case, it is preferable to provide the plugged portion so that the external end face thereof is located 10 to 50% of the axial length of the flow path 2 inward from the input end or the output end, whichever the nearer.

The honeycomb structure 1 described above has a cylindrical shape measuring, for example, 100 to 200 mm in outer diameter and 100 to 250 mm in length (L) in the axial direction (A), and has 50 to 800 flow paths 2 per square inch in the section perpendicular to the axial direction (A), where the flow path 2 has cross sectional area of 0.8 to 10 mm², width of the flow path 2 is from 0.9 to 3.2 mm and thickness of the partition wall 4 that separates the flow paths 2 along the axial direction is from 0.05 to 1.0 mm.

In the honeycomb structure 1 of the present invention, it is important that cutting level is 70% and load length ratio (Rmr (c)) is 90% or less determined at a cutting level of 70% with a reference length of 0.8 mm, on the surface of the partition wall 4.

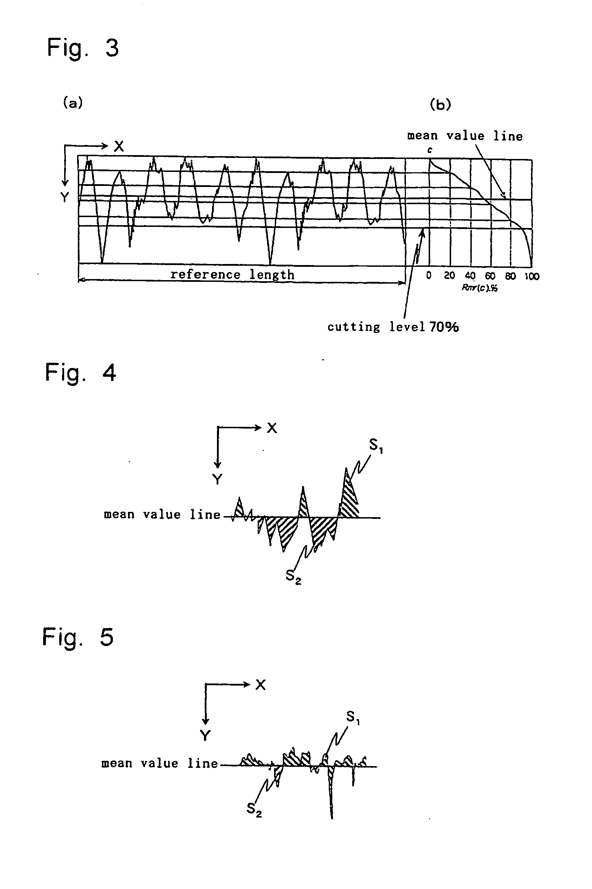

The load length ratio (Rmr (c)) is a parameter related to the surface property defined in JIS B 0601-2001, that is a Japanese industrial standard established in compliance with ISO 4287-1997. The load length ratio (Rmr (c)), that defines the surface property in the direction of roughness curve and in the direction of height, will be described in detail below with reference to Fig. 3.

Fig. 3(a) is a diagram showing an example of roughness curve and Fig. 3(b) is a diagram showing load curve of the roughness curve. The direction of roughness curve is the direction of X axis used in JIS B 0601-2001 (mean value line in Fig. 3(a)), and the direction of height is the direction of Y axis used in the JIS standard (Y direction in Fig. 3).

Defining the load length ratio (Rmr (c)) requires reference length and cutting level.

The reference length is the length in X axis direction of the roughness curve used to determine the characteristic as shown in Fig. 3(a). It was found that, for the honeycomb structure where width of the flow path 2 is in the range described above (from 0.9 to 3.2 mm), entire surface of the partition wall(s) 4 can be represented by determining the roughness curve on the surface of the partition wall(s) 4 of the honeycomb structure 1 assuming the reference length of 0.8 mm.

Fig. 3(a) and Fig. 3(b) show example of the line of cutting level 70%. The cutting level is the proportion in percentage of the height of cutting from the maximum peak to the maximum height (sum of maximum peak height and maximum valley depth specified in JIS B 0601-2001) that is set to 100 within the range of arbitrary reference length described above in the roughness curve (proportion of the distance in the direction of Y axis between the portion in question and the portion that shows the peak height to the maximum peak height).

As such, cutting level is 0% in the portion that shows the maximum peak height and is 100% the portion that shows the maximum valley depth.

In JIS B 0601-2001, load length ratio (Rmr (c)) is defined as the ratio of load length M1 (c) of the roughness curve (profile curve element) at the cutting level c to the evaluation length (namely the reference length). The load length M1 (c) refers to the sum of sections of the roughness curve that are on the body side and are cut off by the straight line lying parallel to the mean value line at the cutting level c.

In other words, the load length M1 (c) means the length of portions of the roughness curve above a straight line that is drawn parallel to the mean value line at the cutting level c over the roughness curve that has the predetermined reference length.

The load length ratio Rmr (c) at the cutting level of 70% of the roughness curve shown in Fig. 3(a) is about 90% as shown in Fig. 3(b).

In the present invention, the inventors found that increase in the pressure loss related to the decrease in the capturing efficiency can be controlled with relatively high accuracy, by setting the cutting level to 70%.

Load length ratio (Rmr (c)) may be measured by using a surface roughness measuring instrument (SE-3400 manufactured by Kosaka Laboratory Co., Ltd., or SE-3500, SE-S500K or other successor of SE-3400).

Fig. 4 is a schematic diagram of roughness curve having load length ratio (Rmr (c)) of 90% or less.

Fig. 5 is a schematic diagram of roughness curve having load length ratio (Rmr (c)) higher than 90%.

When the load length ratio (Rmr (c)) is high, there occurs an increasing tendency of the area (S₁) occupied by the portion located above the mean value line, among the portions surrounded by the mean value line and the roughness curve, to become greater than the area (S₂) occupied by the portion located below the mean value line, as shown in Fig. 5. When the load length ratio (Rmr (c)) is low, there occurs an increasing tendency of the area (S₂) occupied by the portion located below the mean value line, among the portions surrounded by the mean value line and the roughness curve, to become greater than the area (S₁) occupied by the portion located above the mean value line, as shown in Fig. 4. When the load length ratio (Rmr (c)) is low, such a tendency increases that capturing efficiency is not likely to decrease after a long period of capturing the diesel particulates, since the portion located below the mean value line, among the portions surrounded by the mean value line and the roughness curve, becomes greater.

The mean value line herein refers to the mean value line for the roughness curve defined in JIS B 0601-2001.

In the present invention, the surface property which the honeycomb structure should have is defined in a 2-dimensional plane that is extended by the direction of the roughness curve and the direction of height. Accordingly, in the present invention, capturing efficiency of the honeycomb structure can be controlled with higher accuracy than the conventional case where the surface property is defined simply in terms of arithmetic mean roughness. In case load length ratio (Rmr (c)) is set to 90% or less when the cutting level is set to 70% and the reference length is set to 0.8 mm on the surface of the partition wall 4, for example, the tendency is increased that microscopic recesses formed on the surface of the partition wall 4 that affect the capturing of diesel particulates take such a shape that flares toward the flow path 2. In this case, since the flow paths 2 are less likely to be clogged even when the diesel particulates are held in the microscopic recesses, pressure loss in the flow paths 2 and the increase in the pressure loss become smaller, and therefore pressure loss in the honeycomb structure and the increase in the pressure loss due to capturing of the diesel particulates can also be made smaller.

As diesel particulates are captured by the partition wall(s) of the honeycomb structure, pressure loss gradually increases. The honeycomb structure can be regenerated by various methods such as burning away the diesel particulates by directing burning gas directly from a burner, by heating the diesel particulates to burn with a heating metal layer using a nickel chrome wire heater combined with the honeycomb structure, by passing electric current through a filter formed from an electrically conductive material so as to heat itself and burn away the diesel particulates, or blowing air to the honeycomb structure from the output end toward the input end so as to knock off the diesel particulates and burning the particulates.

The honeycomb structure, that undergoes relatively small pressure fluctuation during use and is able to maintain a relatively low resistance against the gas flow over a relatively long period of time in spite of capturing the diesel particulates thereon, can be regarded as a honeycomb structure having relatively high long-term capturing efficiency. A honeycomb structure that has higher long-term capturing efficiency shows relatively shorter intervals between diesel particulate removals (hereinafter referred to as regeneration intervals).

The honeycomb structure 1 that is one embodiment of the present invention undergoes relatively small decrease in the capturing efficiency after a long period of capturing the diesel particulates, and has relatively long regeneration interval of the honeycomb structure. The honeycomb structure 1 can be used with stable performance over a relatively long period of time.

The load length ratio (Rmr (c)) is 75% or less. The higher the load length ratio (Rmr (c)), the higher the tendency of acicular protrusions to decrease becomes on the surface in the direction of height of the roughness curve. In this case, even in an environment that is prone to vibrations, it becomes relatively easier to maintain the surface property. For this reason, the load length ratio (Rmr (c)) is 50% or higher. To sum up, according to the present invention, the load length ratio (Rmr (c)) is 50% or more and 75% or less.

Efficiency of capturing the diesel particulates is affected by the porosity of the partition wall 4, too. When porosity of the partition wall 4 is increased, efficiency of capturing the diesel particulates becomes higher because contact area (surface area of the partition wall 4) with the diesel particulates that pass through the partition wall 4 increases. When porosity of the partition wall 4 is decreased, mechanical properties of the honeycomb structure 1 become relatively higher. Thus relatively high mechanical properties can be obtained while maintaining a relatively high capturing efficiency by controlling the porosity of the partition wall 4 to 40% or more and 45% or less. The mean diameter of the pores existing in the partition wall 4 is preferably 6 µm or more and 15 µm or less, which makes it possible to efficiently capture the diesel particulates that pass through the partition wall 4, without compromising the mechanical properties of the partition wall 4.

Porosity of the partition wall 4 and the mean pore diameter can be measured by the known mercury injection method.

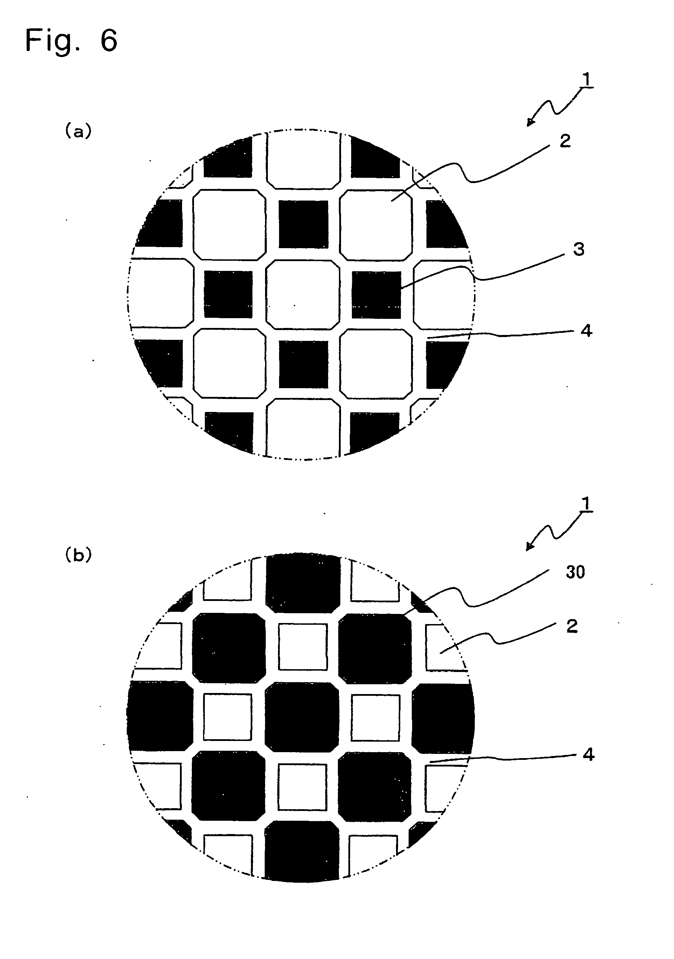

Fig. 6 shows the end face of the honeycomb structure according to another embodiment of the present invention viewed in the axial direction; (a) in plan view showing a part of the input end face, and (b) in plan view showing a part of the output end face.

As shown in Fig. 6(a), when the open end of the flow path 2 that opens on the input end is formed in octagon shape when viewed in the axial direction, the honeycomb structure shown in Fig. 6 can be used preferably as a filter that captures the diesel particulates, and the surface area of the partition wall 4 captures the diesel particulates can be made larger than that of the case of rectangular open end of the flow path 2 show in Fig. 2, and therefore the amount of diesel particulates that are captured can be increased.

An example of manufacturing method for the honeycomb structure of the present invention will be described.

First, the honeycomb structure 1 formed from cordierite as the main component will be described.

First, materials that form cordierite such as kaolin, calcined kaolin, alumina, aluminum hydroxide, silica, talc and calcined talc are mixed so as to obtain a compounded material having a mean particle size (D₅₀) in a range from 10 to 19 µm that would produce a sintered body of cordierite having composition of 40 to 56% by mass of SiO₂, 30 to 46% by mass of Al₂O₃ and 12 to 16% by mass of MgO.

A plasticizer, a thickening agent, a lubricant and water are added to the compounded material and mixed in a universal mixer, rotary mill, type V mixer or the like. The mixture is kneaded by the known 3-roll mill, kneader or the like to obtain a plasticized kneaded mixture.

The kneaded mixture is charged into an extrusion molding machine and formed under a pressure into a green compact of honeycomb shape by using a die that has a cavity measuring, for example, 100 to 250 mm which determines the outer diameter of the perform, and slits for forming the partition wall(s) of the honeycomb structure. The green compact is dried and cut to a predetermined length. Then a slurry made by dissolving the compound material prepared previously into water is poured by dipping process through the output end face (OF) where a mask of checkered pattern is applied. Then flat-tip pins that are coated with a water-repelling resin are inserted from the input end face (IF). The green compact having the pins inserted therein is dried at the normal temperature, to form the plugged portions 30. After drying, the pins are removed and the above operation is carried out on the input side, to form the plugged portions 3. The green compact is then fired at a temperature from 1,350 to 1,420°C in a furnace such as electric furnace or gas burning furnace, thereby to obtain the honeycomb structure of the present invention.

The flow path 2 having octagon shape when viewed in the axial direction as shown in Fig. 6(a) can be obtained by adjusting the configuration of the die that has the slits for forming the partition wall(s).

A length ratio (Rmr (c)) of 90% or less determined at a cutting level of 70% with a reference length of 0.8 mm can be achieved by controlling the mean particle size (D₅₀) of the compounded material within a range from 10 to 19 µm and controlling the firing temperature within a range from 1,350 to 1,420°C.

Porosity of the partition wall 4 of the honeycomb structure 1 formed mainly from cordierite can be controlled to 40% or more and 45% or less, by mixing talc having a mean particle size from 10 to 30 µm, kaolin having a mean particle size from 5 to 10 µm and alumina having a mean particle size from 1 to 60 µm, so that the cordierite has such a composition that contains 45 to 50% by mass of SiO₂, 37 to 40% by mass of Al₂O₃ and 13 to 17% by mass of MgO. When the honeycomb structure is formed from cordierite as the main component, the partition wall can be formed from a porous material without adding a pore forming agent.

The honeycomb structure 1 formed from aluminum titanate as the main component will be described.

The honeycomb structure 1 formed mainly from aluminum titanate can be made by mixing 100 parts by mass of a component consisting of TiO₂ and Al₂O₃ in a molar ratio of 40 to 60 and 60 to 40, respectively, and 1 to 10% by mass of at least one kind of alkaline feldspar having composition of (Na_{y}K_{1-y}) AlSi₃O₈ (0 ≤ y ≤ 1), an oxide of a spinel structure containing Mg, MgO and a compound containing Mg that is turned into MgO when fired, so as to prepare a compounded material having a mean particle size (D₅₀) in a range from 10 to 22 µm, preferably from 15 to 22 µm. 5 to 20 parts by mass of a pore forming agent comprising a resin, starch or carbon is added to 100 parts by mass of this compounded material. Subsequent process up to the formation of the plugged portions is the same as that of the case where the honeycomb structure is formed mainly from cordierite. In case the honeycomb structure is formed mainly from aluminum titanate, the honeycomb structure of the present invention can be made by firing the green compact at a temperature from 1,250 to 1,700°C or preferably from 1,250 to 1,450°C in a furnace such as electric furnace or gas burning furnace.

Porosity of the partition wall 4 of the honeycomb structure 1 formed mainly from aluminum titanate can be controlled to 40% or more and 45% or less, by adding 3 to 15 parts by mass of the pore forming agent having a mean particle size from 10 to 20 µm to 100 parts by mass of the compounded material having a mean particle size from 10 to 60 µm.

In order to control the load length ratio (Rmr (c)), the compounded material having a mean particle size (D₅₀) is controlled, for example, within a range from 10 to 60 µm. Further, 5 to 20% by mass of the pore forming agent comprising resin, starch or carbon may be added optionally. Further optionally, the temperature of firing the green compact may be controlled to 1,450°C or lower. The mean particle size (D₅₀) of the compounded material may be controlled, for example, within a range from 20 to 25 µm. The mean particle size (D₅₀) of the compounded material is most preferably 22 µm.

The honeycomb structure made as described above can be preferably used as filter that captures the diesel particulates on the partition wall 4, by introducing the exhaust gas into one end (input end) of the flow paths 2 and discharging the gas from the other end (output end).

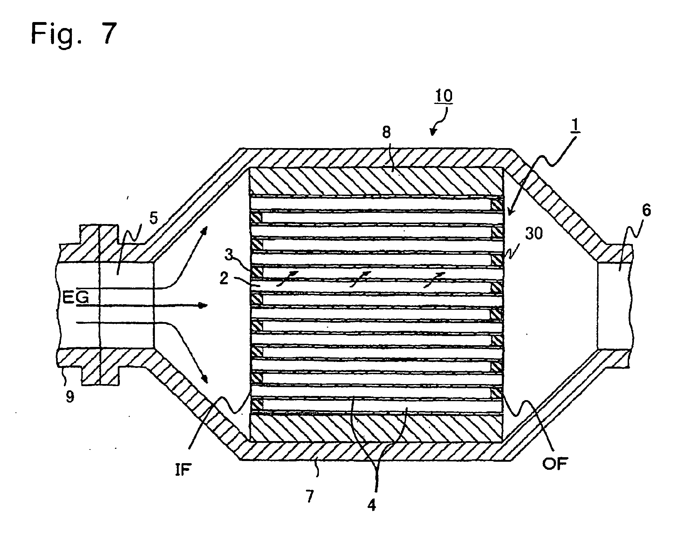

Fig. 7 is a sectional view schematically showing an example of an exhaust gas processing apparatus 10 that employs the honeycomb structure 1 according to the present invention shown in Fig. 1. The exhaust gas processing apparatus corresponds to one embodiment of the purifying apparatus of the present invention.

The exhaust gas processing apparatus 10 shown in Fig. 7 is a purifying apparatus that captures the diesel particulates contained in the exhaust gas (EG) of a diesel engine. In the exhaust gas processing apparatus 10, the honeycomb structure 1 is fastened via an insulating layer 8, that has mat shape including ceramic fibers, onto the inner surface of a metallic casing 7 of cone cup configuration that has an exhaust gas inlet port (or opening) 5 and an exhaust gas outlet port (opening) 6 provided on the respective ends. An exhaust pipe 9 is connected to the casing 7, so that the exhaust gas is introduced through the exhaust pipe 9 into the casing 7. As a diesel engine (not shown) runs and the exhaust gas (EG) is introduced through the exhaust pipe 9 into the casing 7, the exhaust gas (EG) is introduced into the flow path 2 that is not provided with the plugged portion on the input end face (IF) in the honeycomb structure 1. In the flow paths 2 into which the exhaust gas (EG) has been introduced through the input end face (IF), the exhaust gas (EG) is prevented from flowing out by the plugged portion 30 formed at the output end face (OF). The exhaust gas (EG) that is prevented from flowing out passes through the porous partition wall(s) 4 and is discharged through the adjacent flow paths 2 that are not provided with the output end. Diesel particulates contained in the exhaust gas (EG) are captured in the partition wall(s) 4, so that the exhaust gas (EG) is purified to be free of the diesel particulates. The exhaust gas (EG) that has been cleaned of the diesel particulates passes through the pores of the partition wall(s) 4 and is discharged through the output end face (OF) to the outside.

The exhaust gas processing apparatus 10 is an example of purifying apparatus that can capture the diesel particulates efficiently over a long period of time. Filters used in such a purifying apparatus include filter that captures the diesel particulates emitted from internal combustion engines that power automobile, fork lift, electric generator, ship, hydraulic shovel, bulldozer, wheel loader, rough terrain crane, tractor, combine, power tiller or construction vehicle, incineration furnace, boiler and the like. Filters for other applications include filters that decompose and remove toxic dioxin and filters for tap water and sewerage.

The first embodiment of the present invention enables it to achieve effects as described below.

Since the surface properties of the honeycomb structure of the present invention are controlled in a 2-dimensional plane defined by the direction of the roughness curve and the direction of height, the capturing efficiency of the honeycomb structure can be controlled with relatively high accuracy. For example, in case the microscopic recesses formed on the surface of the partition wall(s) that affect the capturing of diesel particulates have a shape that flares toward the flow path, the flow paths are less likely to be clogged even when the diesel particulates are held in the microscopic recesses. As a result, pressure loss in each of the flow paths can be kept relatively low, and the pressure loss caused by the honeycomb structure can also be made smaller. Thus decrease in the capturing efficiency is relatively small after a long period of capturing the diesel particulates, and the honeycomb structure can be used with stable performance over a relatively long period of time. In addition, regeneration interval of the honeycomb structure can be made relatively longer.

When load length ratio (Rmr (c)) is controlled to 50% or more and 75% or less, acicular protrusions on the surface in the direction of height of the roughness curve are suppressed, and therefore even in an environment that is prone to vibrations, it is made possible to maintain the surface property and further elongate the regeneration interval of the honeycomb structure.

A honeycomb structure of long service life that has high mechanical properties and high capturing efficiency can be made by controlling the porosity of the partition wall(s), for example, to 40% or more and 45% or less.

It is made possible to efficiently capture the diesel particulates that pass through the partition wall(s), without compromising the mechanical properties of the partition wall(s), by controlling the mean diameter of the pores existing in the partition wall(s), for example, to 6 µm or more and 15 µm or less.

Also the thermal shock resistance can be increased by using, for example, a sintered body composed of aluminum titanate as the main component.

The honeycomb structure of the present invention captures the diesel particulates on the partition wall, by introducing the exhaust gas into one end of the flow paths serving as the input and discharging the gas from the other end serving as the output. Use of this honeycomb structure makes it possible to capture the diesel particulates relatively efficiently over a relatively long period of time.

The flow path that opens at the input end is formed in octagon shape when viewed in the axial direction, the honeycomb structure of the present invention enables it to increase the amount of the diesel particulates captured, since the surface area of the partition wall that captures the diesel particulates is larger than that of the case where the flow path has rectangular shape.

The purifying apparatus of the present invention uses the honeycomb structure described above, and is thereby capable of efficiently capturing the diesel particulates over a long period of time.

### 2. Second Embodiment

The honeycomb structure according to the first embodiment can capture particulate matter with stable performance over a relatively long period of time. As a result, regeneration interval of the honeycomb structure is relatively long, and the honeycomb structure has relatively long service life. In order to further elongate the service life of the honeycomb structure, it is preferable to suppress the generation of cracks in the boundary between the plugged portion and the partition wall.

The second embodiment provides a honeycomb structure and a purifying apparatus where inner end face of the plugged portion is formed in concave shape so as to suppress the generation of cracks in the boundary between the plugged portion and the partition wall, as will be described in detail later.

In the honeycomb structure of the second embodiment, since the inner end of the plugged portion is formed in concave shape, diesel particulates deposit preferentially on the concave inner end over the partition wall(s). This delays the decrease of efficiency of capturing the diesel particulates.

Accordingly, application of the feature of the honeycomb structure of the second embodiment, specifically the shape of the plugged portion (concave inner end) to the honeycomb structure of the first embodiment makes it possible to efficiently capture the diesel particulates over a longer period of time and provide the honeycomb structure and the purifying apparatus in which generation of cracks is suppressed in the boundary between the plugged portion and the partition wall.

The second embodiment will be described in detail.

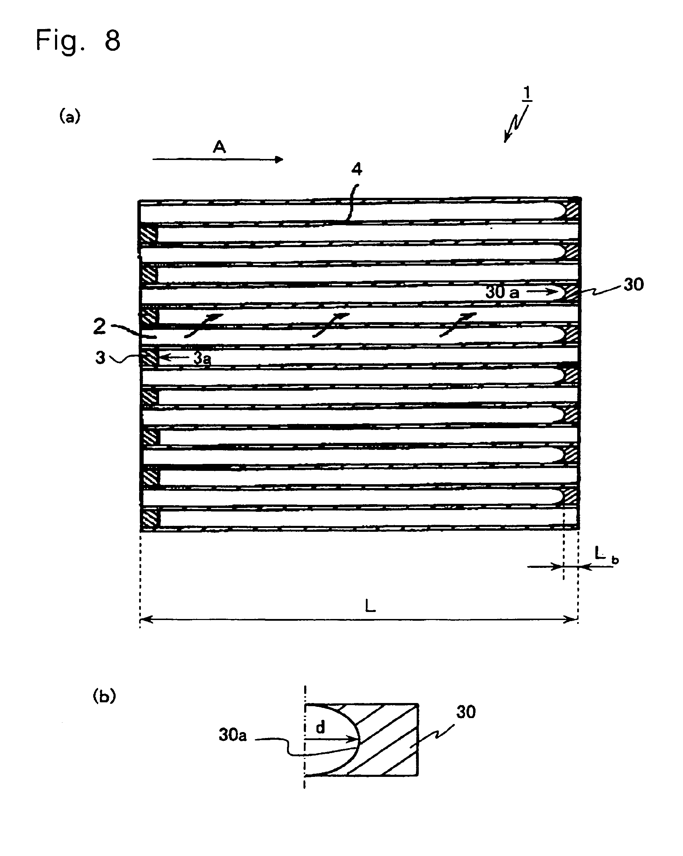

Fig. 8 shows one embodiment of the honeycomb structure of the present invention; (a) in sectional view in a plane parallel to the axial direction A and (b) in enlarged view of plugged portion having concave internal end.

The honeycomb structure 1 of the second embodiment is, similarly to the honeycomb structure of the first embodiment, the honeycomb structure having a plurality of flow paths 2 separated from each other by the partition wall 4 that is disposed in the axial direction (the flow paths being formed by the partition wall(s) 4), where the plurality of flow paths 2 are blocked alternately. That is, the honeycomb structure has a plurality of flow paths 2 separated from each other by the partition wall(s) 4 that are disposed in the axial direction A, where some of the plurality of flow paths 2 are blocked alternately by the plugged portions 3, 30 in a checkered pattern when viewed on the end face in the axial direction. In the honeycomb structure 1 of the second embodiment, the plurality of flow paths 2 are blocked alternately on either end by the plugged portions 3, 30, while the inner end of the plugged portion 3, 30 is formed in concave shape in sectional view in the axial direction.

The honeycomb structure 1 shown in Fig. 8 is, similarly to the honeycomb structure of the first embodiment, formed from a sintered body composed mainly of, for example, cordierite, aluminum titanate, silicon carbide, silicon nitride, alumina, mullite, lithium aluminum silicate or the like, and has a cylindrical shape measuring, for example, 100 to 200 mm in outer diameter and 100 to 250 mm in length in the axial direction A, and has 50 to 800 flow paths 2 per square inch in the section perpendicular to the axial direction A.

In the honeycomb structure 1 of the present invention, the inner ends of plugged portions 30 that is provided on at least one end of the plurality of flow paths 2 (the end on the right in Fig. 8(a)), namely inner ends 30a of the plugged portions 30 are formed in concave shape in sectional view along the axial direction A (in the direction parallel to the axial direction A).

As the inner end 30a of the plugged portion 30 is formed in concave shape, the boundaries between the partition wall 4 and the inner end 30a of the plugged portion 30 are caused to run smoothly and continuously from the partition wall 4 to the inner end 30a of the plugged portion 30, and the surface area of inner end 30a of the plugged portion 30 is greater than in the case of the conventional flat inner end face.

This configuration decreases the points where the stress is concentrated in the boundaries between the partition wall 4 and the inner end 30a of the plugged portion 30. As a result, in the honeycomb structure 1 of the second embodiment, generation of cracks and melt loss in the boundaries between the partition wall 4 and the inner end 30a of the plugged portion 30 can be reduced over a long period of use.

In case the inner end 30a of the plugged portion 30 is formed in concave shape, diesel particulates deposit preferentially on the concave inner end 30a over the partition wall 4, thus delaying the decrease of efficiency of capturing the diesel particulates over a long period of use.

The plugged portion 30 having inner end face 30a formed in concave shape may be either only the plugged portion 30 disposed at one end of the honeycomb structure 1 as shown in Fig. 8(a), or the inner end 3a of the plugged portion 3 on the other end (end shown on the left in Fig. 8(a)) may be formed in concave shape. In case only the plugged portion disposed at one end of the honeycomb structure 1 is formed in concave shape on the inner end thereof, it is preferable to provide the plugged portion 30 having inner end face 30a formed in concave shape on the exhaust gas outlet side. This construction allows more diesel particulates to deposit preferentially on the concave inner end 30a of the plugged portion 30 than on the partition wall 4. As a result, it is made possible to delay the decrease of pressure loss in the partition wall, and it is made possible to efficiently capture the diesel particulates stably over a longer period of time.

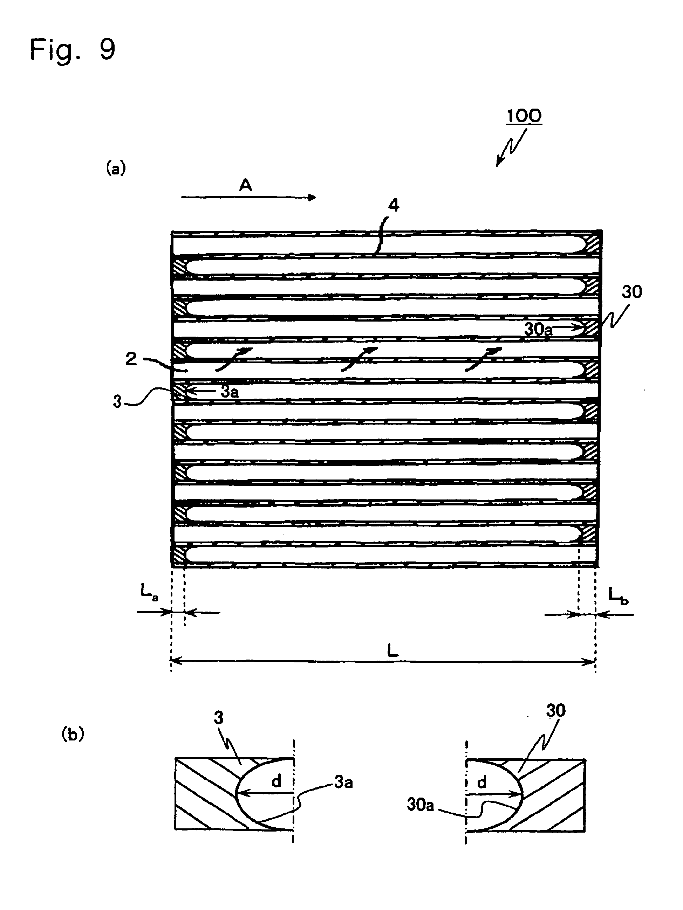

The honeycomb structure 1 shown in Fig. 9 has such a constitution as the inner ends 3a, 30a of the plugged portions 3, 30 provided on both ends of the plurality of flow paths 2 are formed in concave shape in sectional view in the direction parallel to the axial direction (A), as shown in Fig. 9(a).

In the case of this honeycomb structure 1, since stress concentration is reduced at both ends of the flow paths 2, cracks and melt loss can be suppressed from being generated in the boundary between the partition wall 4 and the inner end 3a of the plugged portion 3 and in the boundary between the partition wall 4 and inner end 30a of the plugged portion 30.

In the honeycomb structure 1 where the inner end 30a of the plugged portion 30 is formed in concave shape at one end as shown in Fig. 8, while there is no limitation on the length (L_{b}) of the plugged portion 30 in the axial direction, it is preferable that ratio (L_{b}/L) of this length to the total length L of the honeycomb structure is 0.007 or more and 0.2 or less. When the ratio (L_{b}/L) is 0.007 or higher, the plugged portion 30 can be prevented from falling off and reliability can be kept sufficiently high. When the ratio (L_{b}/L) is 0.2 or lower, efficiency of capturing the diesel particulates can be maintained above a certain level. The depth d of the inner end 30a is preferably 0.1 mm or more and 0.5 mm or less.

In the honeycomb structure 1 where the inner ends 3a, 30a of the plugged portions 3, 30 are formed in concave shape at the respective ends as shown in Fig. 9, while there is no limitation on the lengths (Lₐ) and (L_{b}) of the plugged portions 3, 30 in the axial direction, it is preferable that ratios (Lₐ/L) and (L_{b}/L) of these lengths to the total length L of the honeycomb structure 1 are 0.007 or more and 0.1 or less, and the depth d of the inner end 3a, 30a is preferably 0.1 mm or more and 0.5 mm or less.

Concave shape of the inner ends 3a, 30a of the plugged portions 3, 30 means, for example, bowl shape, pyramid shape, truncated conical shape, screw driver tip shape or a combination of these shapes in sectional view along the axial direction. Fig. 10 shows the shape of the internal end 30a of the plugged portion 30 in sectional view along the axial direction A of the honeycomb structure 1 (in the direction parallel to the axial direction A), (a) rectangular shape, (b) pyramid or conical shape, (c) truncated pyramid or conical shape, (d) screw driver tip shape, (e) a configuration combining truncated pyramid or conical shape and screw driver tip shape.

In case the honeycomb structure 1 where the inner ends 3a, 30a of the plugged portions 3, 30 are formed in concave shape in sectional view, it is preferable that the inner ends 3a, 30a are formed in bowl shape as shown in the perspective view of Fig. 10(f). When the inner end 3a of the plugged portion 3 or the inner end 30a of the plugged portion 30 is formed in bowl shape, such a surface is formed that gradually slopes from the partition wall 4 toward the inner end 30a of the plugged portion 30, and therefore stress concentration is less likely to occur and the surface area of the inner end 30a of the plugged portion 30 becomes greater than in the case of the conventional flat inner end face.

This results in decreased the number of points where the stress is concentrated in the boundaries between the partition wall 4 and the inner ends 3a, 30a of the plugged portions 3, 30, so that the generation of cracks and melt loss in the boundaries between the partition wall 4 and the inner end 3a or 30a can be reduced over a long period of use. Also in case the inner ends 3a, 30a of the plugged portions 3, 30 are formed in bowl shape, diesel particulates deposit preferentially on the concave inner end 3a, 30a over the partition wall 4, so that stable capturing efficiency can be maintained over a relatively long period of time.

Since resistance of the honeycomb structure 1 to thermal shock is influenced by the material composition, the honeycomb structure is preferably formed by a sintered body composed of aluminum titanate as the main component. Aluminum titanate has exceptionally high resistance to thermal shock, and can be used with stable performance over a relatively long period of time.

The term 'main component' in the second embodiment refers to a component that occupies 50% by mass or more of the components constituting the honeycomb structure 1.

To form the honeycomb structure 1 where either the inner end 3a or 30a of the plugged portion 3, 30 has concave shape, pins having convex shape at the tip may be used in the method of manufacturing the honeycomb structure described previously.

### Examples

Examples of the first embodiment of the present invention will be described. It should be noted that the present invention is not limited to these Examples.

### Example 1

100 parts by mass of a component composed of TiO₂ and Al₂O₃ in a molar ratio of 50 and 50, respectively, and 1 to 10 parts by mass of at least one kind of alkaline feldspar represented by a composition formula of (Na_{y}K_{1-y}) AlSi₃O₈ (0 ≤ y ≤ 1), an oxide of spinel structure containing Mg, MgO and a compound containing Mg that would be turned into MgO when fired were mixed, so as to prepare a compounded material having a mean particle size (D₅₀) show in Table 1. A pore forming agent in quantity shown in Table 1 was added to 100 parts by mass of this compounded material, and further a plasticizer, a thickening agent, a lubricant and water were added thereto and mixed in a universal mixer. The mixture was kneaded by a kneader, thereby to obtain a plasticized kneaded mixture.

The kneaded mixture was charged into an extrusion molding machine and formed under a pressure into a green compact of a honeycomb shape by using a die having a cavity measuring 180 mm which would determine the outer diameter of the honeycomb structure finally obtained and slits provided for forming the partition wall of the honeycomb structure. The green compact was dried and cut to a predetermined length. Then, slurry made by dissolving the compounded material prepared previously into water was poured by dipping process through an output end where a mask of checkered pattern was applied. Then flat-tip pins that were coated with a water-repelling resin were inserted through the input end (IF). The green compact having the pins inserted therein was dried at the normal temperature, to form the plugged portions 30. After drying, the pins were removed and the above operation was carried out on the input side, to form the plugged portions 3.

The green compacts having the plugged portions 3, 30 formed therein were fired at the temperature shown in Table 1, to obtain samples Nos. 1 to 11 of the honeycomb structure as shown in Fig. 1.

In order to control load length ratio determined at a cutting level of 70% with a reference length of 0.8 mm, the mean particle size (D₅₀) of the compounded material, the proportion of the pore forming agent added to 100 parts by mass of the compounded material and the firing temperature were adjusted and thus samples having various values of load length ratio were prepared.

Samples Nos. 1 to 11 were all formed to measure 144 mm in outer diameter and 152 mm in length (L) in the axial direction (A).

Before capturing the diesel particulates, pressure losss (or pressure drop) from the input end (IF) to the output end (OF) was measured with a manometer for each sample. Then after connecting the input end (IF) of each sample to a diesel particulate generating apparatus (not shown), a jet of gas that contained diesel particulates and was heated to 200°C was directly applied from this apparatus at a flow rate of 2.27 Nm³/minute, and pressure loss from the input end (IF) to the output end (OF) was measured with a manometer when 12 grams of diesel particulates was captured for a volume of 0.001 m³ of the honeycomb structure 1.

Then after jet of gas was applied directly to samples Nos. 1 to 11 and the diesel particulates that had been captured were removed, portions including the partition wall 4 were cut off from the samples Nos. 1 to 11 and were subjected to surface roughness meter (SE-3400 manufactured by Kosaka Laboratory Co., Ltd.) to measure load length ratio (Rmr (c)) and maximum height (Ry) in accordance to JIS B 0601-2001.

The measurements were made by setting the cutting level on the surface of the partition wall 4 to 70%, the reference length to 0.8 mm and cutoff point, tip radius of the probe and tip speed of the probe to 0.8 mm, 2 µm and 0.5 mm/second, respectively.

**Table 1**

| No. | Mean particle size (D₃₀)of compound material (µm) | Additive amount of pore forming agent (parts by mass) | Firing temperature (°C) | Load length ratio Rmr (C) (%) | Maximum height Ry (µm) | Pressure loss (before capturing) (KPa) | Pressure loss (after capturing) (KPa) | Increase in pressure loss (KPa) |
|---|---|---|---|---|---|---|---|---|
| 1 | 22 | 10 | 1,350 | 50 | 61 | 5 | 7 | 2 |
| 2 | 22 | 10 | 1,400 | 64 | 50 | 5 | 7 | 2 |
| 3 | 22 | 10 | 1,450 | 70 | 44 | 5 | 8 | 3 |
| 4 | 22 | 8 | 1,400 | 74 | 41 | 5 | 8 | 3 |
| 5 | 22 | 5 | 1,400 | 75 | 39 | 5 | 9 | 4 |
| 6 | 22 | 5 | 1,410 | 76 | 37 | 5 | 10 | 5 |
| 7 | 22 | 5 | 1,440 | 89 | 34 | 5 | 10 | 5 |
| 8 | 22 | 5 | 1,450 | 90 | 33 | 5 | 10 | 5 |
| *9 | 22 | 5 | 1,470 | 91 | 31 | 5 | 13 | 8 |
| *10 | 10 | 20 | 1,350 | 95 | 27 | 4 | 16 | 12 |
| *11 | 10 | 20 | 1,400 | 93 | 33 | 4 | 15 | 11 |

| | | | | | | | | |
|---|---|---|---|---|---|---|---|---|
| Samples 6-8 are not according to claim 1. | | | | | | | | |

As will be apparent from Table 1, samples Nos. 1 to 8 of the present invention where load length ratio (Rmr (c)) was 90% or less showed values of pressure loss after capturing the particulate that were lower by 3 KPa or more than that of samples Nos. 9 to 11 where load length ratio (Rmr (c)) exceeded 90%. Samples Nos. 1 to 5 where load length ratio (Rmr (c)) was in a range from 50% to 75%, in particular, showed especially low pressure loss of 9 KPa or less. The difference between the pressure loss before capturing the diesel particulates and the pressure loss after capturing the diesel particulates, namely the increase in pressure loss, was relatively small, not greater than 5 kPa, in samples Nos. 1 to 8 where load length ratio (Rmr (c)) was 90% or less, but was relatively large, 8 kPa or more, in samples Nos. 9 to 11 of Comparative Example.

Comparison of sample No. 8 and sample No. 11 showed that maximum height (Ry) was the same in both samples, while sample No. 11 showed a large increase in pressure loss due to the load length ratio (Rmr (c)) exceeding 90%, but sample No. 8 showed a small increase in pressure loss due to the load length ratio (Rmr (c)) not higher than 90%.

### Example 2

100 parts by mass of a component composed of TiO₂ and Al₂O₃ in mole fractions of 45 and 55, respectively, and 1 to 10 parts by mass of at least one kind of alkaline feldspar represented by a composition formula of (Na_{y}K_{1-y}) AlSi₃O₈ (0 ≤ y ≤ 1), an oxide of a spinel structure containing Mg, MgO and a compound containing Mg that would be turned into MgO when fired were mixed, so as to prepare a compounded material having a mean particle size (D₅₀) of 25 µm. A pore forming agent in proportion shown in Table 2 was added to 100 parts by mass of this compounded material, and further a plasticizer, a thickening agent, a lubricant and water were added thereto and mixed in a universal mixer. The mixture was kneaded by a kneader, thereby to obtain a plasticized kneaded mixture.

The kneaded mixture was charged into an extrusion molding machine and formed under a pressure into a green compact of a honeycomb shape by using a die having a cavity measuring 180 mm which would determine the outer diameter of the honeycomb structure finally ordained and slits provided for forming the partition wall of the honeycomb structure. The green compact was dried and cut to a predetermined length. Then, slurry made by dissolving the compounded material prepared previously into water was poured by dipping through an output end where a mask of checkered pattern was applied. Then flat-tip pins that were coated with a water-repelling resin were inserted through the input end face (IF). The green compact having the pins inserted therein was dried at the normal temperature, to form the plugged portions 30. After drying, the pins were removed and the above operation was carried out on the input side, to form the plugged portions 3.

The green compacts having the plugged portions 3, 30 formed therein were fired at 1,450°C, to obtain samples Nos. 12 to 16 of the honeycomb structure as shown in Fig. 1.

Samples Nos. 12 to 16 were all formed to size of 144 mm in outer diameter and 152 mm in length (L) in the axial direction (A).

Porosity of samples Nos. 12 to 16 was measured by mercury injection method.

Before capturing the diesel particulates, pressure loss from the input end (IF) to the output end (OF) was measured with a manometer for each sample. For the manometer, Manostar gage W081F Series manufactured by Yamamoto Electric Works, Co., Ltd. was used over a measuring range from 0 to 30 kPa. Then, after connecting the input end (IF) of each sample Nos. 12 to 16 to a diesel particulate generating apparatus (not shown), a jet of gas that contained diesel particulates and was heated to 200°C was directly applied from this apparatus at a flow rate of 2.27 Nm³/minute, and pressure loss from the input end (IF) to the output end was measured with a manometer when 12 grams of diesel particulate was captured for a volume of 0.001 m³ of the honeycomb structure 1.

Then, after jet of gas was applied directly to samples Nos. 12 to 16 and the diesel particulates that had been captured were removed, portions including the partition wall 4 were cut off from samples Nos. 12 to 16 and were subjected to surface roughness meter (SE-3400 manufactured by Kosaka Laboratory Co., Ltd.) to measure load length ratio (Rmr (c)) and maximum height (Ry) with the cutting level on the surface of the partition wall 4 being set to 70% and the reference length being set to 0.8 mm in accordance to JIS B 0601-2001. The load length ratio (Rmr (c)) was not higher than 90% for all samples.

Additional sample was prepared for the evaluation of mechanical properties, and compression failure strength was measured in accordance to JASO M 505-87 that is a standard system specified by Japanese Automobile Engineering Association. This sample was a cube measuring 10 mm along each side that was cut off from the honeycomb structure 1 manufactured by the method described above. The sample was pressured in the axial direction of the honeycomb structure 1, namely the direction of A axis specified in JASO M 505-87.

The compression failure strength according to JASO M 505-87 shown in Table 2 was measured under the following conditions.
Test apparatus: A pressure tester compatible to JIS B 7733 or equivalent (Autograph AG-IS manufactured by Shimadzu Corporation) was used.
Test procedure: Foamed polyethylene sheets were placed on the top and bottom surfaces of the sample so that the load would be applied uniformly, and a ceramic plate was placed on the foamed polyethylene sheet provided on the top.

Pressure was applied continuously until the sample failed, and the load upon failure was measured, while keeping the head speed in a range from 0.5 to 1.3 mm/minute.

Compression failure strength P=F/S was determined where P is compression failure strength (Pa), F is the load (N) upon failure and S is pressured surface area (including flow paths) 1 × 10⁻⁴ (m²).

**Table 2**

| No. | Additive amount of pore forming agent (parts by mass) | Porosity of the partition wall (%) | Compression failure strength (MPa) | Pressure loss (before capturing) (KPa) | Pressure loss (after capturing) (KPa) | Increase in pressure loss (KPa) |
|---|---|---|---|---|---|---|
| 12 | 0 | 30 | 13 | 6 | 13 | 7 |
| 13 | 9 | 40 | 11 | 5 | 10 | 5 |
| 14 | 12 | 43 | 8 | 5 | 9 | 4 |
| 15 | 15 | 45 | 7 | 5 | 8 | 3 |
| 16 | 27 | 55 | 4 | 4 | 6 | 2 |

As will be apparent from Table 2, samples Nos. 13 to 15 where porosity of the partition wall was 40% or more and 45% or less showed high compression failure strength of 7 MPa or more and small increase in pressure loss of 5 KPa or less, thus proving high mechanical property and high capturing efficiency combined.

Sample No. 12 where porosity of the partition wall was less than 40%, in contrast, showed high compression failure strength of 13 MPa but a large increase in pressure loss of 7 KPa, and sample No. 16 where porosity of the partition wall was higher than 45% showed low increase in pressure loss of 2 KPa but low compression failure strength of 4 MPa.

## Claims

1. A honeycomb structure (1) comprising a plurality of flow paths (2) separated from each other by a partition wall (4) extending from an input end face to an output end face, **characterized in that** the partition wall (4) has a load length ratio (Rmr (c)) of 50% to 75% determined at a cutting level of 70% with a reference length of 0.8 mm.

2. The honeycomb structure (1) according to claim 1, wherein porosity of the partition wall ranges 40% to 45%.

3. The honeycomb structure (1) according to claim 1 or claim 2, wherein a mean diameter of the pores existing in the partition wall (4) ranges from 6 µm to 15 µm.

4. The honeycomb structure (1) according to any one of claims 1-3, formed by a sintered body containing aluminum titanate as a main component.

5. The honeycomb structure (1) according to any one of claims 1-4, wherein the plurality of flow paths (2) comprises flow paths blocked on the input end (3) and the flow paths blocked on the output end (30) disposed alternately through the partition wall (4).

6. The honeycomb structure (1) according to claim 5, wherein at least either the input end (3) or the output end (30) has concave shape (3a; 30a) on the inner surface thereof.

7. The honeycomb structure (1) according to claim 6, wherein the input end (3) and the output end (30) both have a concave shape (3a; 30a) on the inner surface thereof.

8. The honeycomb structure according to any one of claims 1-7, wherein the flow paths (2) having an opened input end thereof have an octagonal shaped open end.

9. A purifying apparatus (10) comprising:
the honeycomb structure (1) according to any one of claims 1-8; and
a casing (7) having an inlet port (5) located on the side of the input end face of the honeycomb structure and an outlet port (6) located on a side of the output end face of the honeycomb structure (1), and accommodating the honeycomb structure (1), wherein
a gas or liquid is passed from the inlet port (5) to the outlet port (6) and particulate matter contained in the gas or liquid is captured on the partition wall (4).

## Patentansprüche

1. Wabenstruktur (1), umfassend eine Mehrzahl von Strömungspfaden (2), die voneinander durch eine Trennwand (4) getrennt sind, die sich von einer Eingangsendfläche zu einer Ausgangsendfläche erstreckt, **dadurch gekennzeichnet, dass** die Trennwand (4) ein Last/Längen-Verhältnis (Rmr (c)) von 50% bis 75% bestimmt bei einem Schnittniveau von 70% mit einer Referenzlänge von 0,8 mm aufweist.

2. Wabenstruktur (1) nach Anspruch 1, wobei eine Porosität der Trennwand zwischen 40% und 45% liegt.

3. Wabenstruktur (1) nach Anspruch 1 oder Anspruch 2, wobei ein mittlerer Durchmesser der Poren, die in der Trennwand (4) vorhanden sind, zwischen 6 µm und 15 µm liegt.

4. Wabenstruktur (1) nach einem der Ansprüche 1-3, die durch einen Sinterkörper gebildet ist, der Aluminiumtitanat als eine Hauptkomponente enthält.

5. Wabenstruktur (1) nach einem der Ansprüche 1-4, wobei die Mehrzahl von Strömungspfaden (2) an dem Eingangsende (3) blockierte Strömungspfade und die an dem Ausgangsende (30) blockierten Strömungspfade umfasst, die abwechselnd durch die Trennwand (4) angeordnet sind.

6. Wabenstruktur (1) nach Anspruch 5, wobei wenigstens entweder das Eingangsende (3) oder das Ausgangsende (30) eine konkave Form (3a; 30a) an der Innenoberfläche davon aufweist.

7. Wabenstruktur (1) nach Anspruch 6, wobei das Eingangsende (3) und das Ausgangsende (30) beide eine konkave Form (3a; 30a) an der Innenoberfläche davon aufweisen.

8. Wabenstruktur nach einem der Ansprüche 1-7, wobei die Strömungspfade (2) mit einem geöffneten Eingangsende ein oktogonförmiges offenes Ende aufweisen.

9. Reinigungsvorrichtung (10), umfassend:
die Wabenstruktur (1) nach einem der Ansprüche 1-8; und
ein Gehäuse (7) mit einer Einlassöffnung (5), die an der Seite der Eingangsendfläche der Wabenstruktur angeordnet ist, und mit einer Auslassöffnung (6), die an einer Seite der Ausgangsendfläche der Wabenstruktur (1) angeordnet ist, und das die Wabenstruktur (1) aufnimmt, wobei
ein Gas oder eine Flüssigkeit von der Einlassöffnung (5) zu der Auslassöffnung (6) geführt wird und Partikel, die in dem Gas oder der Flüssigkeit enthalten sind, an der Trennwand (4) gefangen werden.

## Revendications

1. Structure en nid d'abeilles (1) comprenant une pluralité de trajectoires d'écoulement (2) séparées les unes des autres par une paroi de séparation (4) s'étendant à partir d'une face d'extrémité d'entrée jusqu'à une face d'extrémité de sortie, **caractérisée en ce que** la paroi de séparation (4) a un rapport de charge sur longueur (Rmr (c)) de 50% à 75% déterminé à un niveau de coupe de 70% avec une longueur de référence de 0,8 mm.

2. Structure en nid d'abeilles (1) selon la revendication 1, dans laquelle la porosité de la paroi de séparation est de l'ordre de 40% à 45%.

3. Structure en nid d'abeilles (1) selon la revendication 1 ou la revendication 2, dans laquelle un diamètre moyen des pores existant dans la paroi de séparation (4) est de l'ordre de 6 µm à 15 µm.

4. Structure en nid d'abeilles (1) selon l'une quelconque des revendications 1 à 3, formée par un corps fritté contenant du titane d'aluminium en tant que composant principal.

5. Structure en nid d'abeilles (1) selon l'une quelconque des revendications 1 à 4, dans laquelle la pluralité de trajectoires d'écoulement (2) comprend des trajectoires d'écoulement bloquées sur l'extrémité d'entrée (3) et les trajectoires d'écoulement bloquées sur l'extrémité de sortie (30) disposées de manière alternée à travers la paroi de séparation (4).

6. Structure en nid d'abeilles (1) selon la revendication 5, dans laquelle au moins l'extrémité d'entrée (3) ou l'extrémité de sortie (30) a une forme concave (3a ; 30a) sur sa surface interne.

7. Structure en nid d'abeilles (1) selon la revendication 6, dans laquelle l'extrémité d'entrée (3) et l'extrémité de sortie (30) ont toutes deux une forme concave (3a ; 30a) sur leur surface interne.

8. Structure en nid d'abeilles (1) selon l'une quelconque des revendications 1 à 7, dans laquelle les trajectoires d'écoulement (2) ayant leur extrémité d'entrée ouverte ont une extrémité ouverte de forme octogonale.

9. Appareil de filtration (10) comprenant:
la structure en nid d'abeilles (1) selon l'une quelconque des revendications 1 à 8 ; et
un boîtier (7) ayant un orifice d'entrée (5) situé du côté de la face d'extrémité d'entrée de la structure en nid d'abeilles et un orifice de sortie (6) situé d'un côté de la face d'extrémité de sortie de la structure en nid d'abeilles (1), et logeant la structure en nid d'abeilles (1), dans lequel :
un gaz ou liquide passe de l'orifice d'entrée (5) à l'orifice de sortie (6) et la matière particulaire contenue dans le gaz ou le liquide est capturée sur la paroi de séparation (4).
